# EUROPÄISCHE PATENTSCHRIFT

(11) **EP 1 154 351 B1**
(45) Veröffentlichungstag und Bekanntmachung des Hinweises auf die Patenterteilung: **03.03.2004**
(21) Anmeldenummer: 01440098.0
(22) Anmeldetag: 09.04.2001
(51) Int. Cl.: G06F 11/18

(54) **Mehrrechner-System**
Multiprocessor system
Système multiprocesseur

(30) Priorität: 11.05.2000 DE 10023166
(43) Veröffentlichungstag der Anmeldung: 14.11.2001
(73) Patentinhaber: ALCATEL, 75008 Paris (FR)
(72) Erfinder: Gebert, Thomas, 74626 Bretzfeld (DE)
(74) Vertreter: Menzietti, Domenico, Dipl.-Ing

(56) Entgegenhaltungen:
- DE-A- 3 632 205
- US-A- 5 377 206
- D. FURA ET AL.: "Design and validation of a fault-tolerant distributed clock" PROCEEDINGS OF THE IEEE 1988 NATIONAL AEROSPACE AND ELECTRONICS CONFERENCE , Bd. 2, 23. - 27. Mai 1988, Seiten 495-502, XP000011949 Dayton, OH, US
- J.L.W. KESSELS: "Two designs of a fault-tolerant clocking system" IEEE TRANSACTIONS ON COMPUTERS, Bd. c-33, Nr. 10, Oktober 1984 (1984-10), Seiten 912-919, XP000648355 New York, NY, US

## Beschreibung

Die Erfindung betrifft ein Mehrrechner-System gemäß dem Oberbegriff des Anspruchs 1. Bei Mehrrechner-Systemen, die in Echtzeitbetrieb arbeiten, wird fast immer ein Master-Clock benötigt, der die Zykluszeit des Systems festlegt. Die Taktdauer eines Master-Clocks liegt sehr oft im Bereich 10 ms bis 500 ms. Mit jedem neuen Taktzyklus werden alle Operationen des Systems neu synchronisiert bzw. gestartet. Aus Sicherheits- bzw. Zuverlässigkeitsgründen muss der Master-Clock redundant ausgelegt sein. Das bedeutet, dass im Falle eines Ausfalls oder eines Fehlers in der Master-Clock-Generierung dennoch ein Master-Clock vorgegeben werden muss, der zuverlässig und ohne Ausfälle die Synchronisierung der Rechner gewährleistet. Bei herkömmlichen Systemen, die auf Basis von Phasenregelschleifen (PLL Phase Locked Loop) arbeiten, ist diese Sicherheitsanforderung nicht erfüllt, da kurzzeitige Lücken in der Master-Clock-Generierung und Frequenzänderungen auftreten können. Derartige Störungen müssen insbesondere bei hochsensiblen, sicherheitsrelevanten Anwendungen, für die häufig Dreirechner-Systeme mit parallellaufenden Rechnern verwendet werden, unbedingt vermieden werden. Zu diesen Anwendungen gehören unter anderem bahntechnische Anlagen, wie Stellwerke und Gleisfreimeldeanlagen sowie Geschwindigkeits- und Abstandsmesseinrichtungen.

Aus dem Dokument D. FURA ET AL.: "Design and validation of a fault-tolerant distributed clock", PROCEEDINGS OF THE IEEE 1998 AEROSPACE AND ELECTRONICS CONFERENCE, Bd. 2, 23.-27. Mai 1998, Seiten 495-502, Dayton, US, ist ein Mehrrechmersystem bekannt, bei dem eine separate, frei laufende, Clock-Einheit dem jeweiligen Rechner zugeordnet ist, die zusammen ein distribuirtes, fehlertolerantes Zeittakterzeugungssystem bilden. Die Synkronisierung der verschiedenen Clock-Signale erfolgt dabei dadurch, dass eine, dem jeweiligen Rechner zugeordnete, Isolations einheit, der jedes der erzeugten Clock-Signale zugeführt wird, eine Master-Clock bildet, in dem ein Median-Wert der erzeugten Signale als Master-Clock ausgewählt wird.

Der Erfindung liegt die Aufgabe zugrunde, ein Mehrrechner-System der gattungsgemäßen Art hinsichtlich der Synchronisierung der Rechner zur Sicherstellung einer redundanten Betriebsweise zu verbessern bzw. zu vereinfachen.

Die Aufgabe wird erfindungsgemäß mit den kennzeichnenden Merkmalen des Anspruchs 1 gelöst. Da die Grundtakte nur eine geringe Phasenverschiebung zueinander aufweisen und somit in ihrer zeitlichen Lage fast übereinstimmen, kann einer der Grundtakte als Master-Clock definiert werden und im Fehlerfall ohne großen Taktsprung von einem anderen Grundtakt ersetzt werden. Der Versatz, d.h. die Phasenverschiebung zwischen den Grundtakten ist dabei bezogen auf die Länge des Grundtaktes vernachlässigbar. Mit abnehmender Länge des Grundtaktes muss auch die Phasenverschiebung entsprechend abnehmen, damit die Grundtaktveränderung im Fehlerfall tolerierbar ist. Sehr oft liegt die Taktdauer der Grundtakte und damit auch des Master-Clocks im Bereich 10 ms bis 500 ms. Die Phasenverschiebung sollte dann 10 µs bis 500 µs nicht überschreiten. Die Größe der Phasenverschiebung hängt von der Leistungsfähigkeit der verwendeten Prozessoren in den Rechnern und deren Interruptantwortzeit ab. Allerdings muss die Erzeugung des Master-Clocks nicht zwingend mit Hilfe eines Prozessors erfolgen. Die Logik kann ebenso in Hardware aufgebaut werden, wobei dann die Phasenverschiebung gegen Null gehen kann, wenn die Hardware-Logik ausreichend schnell ist. Aus Kostengründen ist es aber vorzuziehen, die Master-Clock-Generierung in die Rechner zu legen, da der Master-Clock hauptsächlich für parallellaufende Rechnersysteme benutzt wird und dort die Rechner Bestandteil des Systems sind. Generell ist dafür zu sorgen, dass die Grundtakte der Rechner synchron sind und keine Drift zueinander aufweisen.

Gemäß Anspruch 2 sind alle Rechner über Synchronisationsleitungen miteinander verbunden. Über die Synchronisationsleitungen bekommt jeder Rechner von allen weiteren Rechnern dessen jeweiligen Grundtakt.

Zur Identifizierung der Herkunft der empfangenen Grundtakte wird gemäß Anspruch 3 eine Rechnernummer verwendet, die entsprechend einer in Anspruch 4 charakterisierten vorteilhaften Ausführungsform über Digitaleingänge einer Steckerkodierung eingelesen werden.

Gemäß Anspruch 5 ist jeder Rechner mit einem Timer ausgestattet, mit dessen Hilfe festgestellt wird, ob die externen Grundtakte zum richtigen Zeitpunkt erscheinen. Vorzugsweise werden dazu die steigenden Flanken der Grundtakte in Form von Interrupts in Beziehung zueinander gesetzt. Aus der Reihenfolge, dem zeitlichen Abstand der Interrupts und der Nummer des Interrupts, d.h. der zugeordneten Rechnernummer, kann erkannt werden, ob und welcher Grundtakt bzw. Rechner ausgefallen ist. Jeder Rechner besitzt somit die Möglichkeit, den Ausfall unabhängig von allen anderen Rechnern zu erkennen und eine Fehlerreaktion, beispielsweise das Abschalten des Rechners, einzuleiten. Die Kommunikation der Rechner untereinander ist auf den Austausch der Grundtakte beschränkt, durch welche die Rechner identifiziert sind.

Für viele Anwendungen besteht das Mehrrechner-System gemäß Anspruch 6 aus drei redundanten und parallellaufenden Rechnern. Dabei ist vorzugsweise die in Anspruch 7 angegebene Master-Clock-Hierarchie für Normalbetrieb und im Fehlerfall vorgesehen. Für die unterbrechungsfreie Synchronisierung eines derartigen Dreirechner-Echtzeit-Systems sind im wesentlichen lediglich pro Rechner ein Timer, Synchronisationsleitungen und eine Steckerkodierung mit einigen Widerständen zur Erkennung der Rechnernummer erforderlich. Gegenüber der oben erwähnten bekannten PLL-Synchronisierung besteht der Vorteil neben der Sicherstellung einer redundanten Master-Clock-Generierung auch darin, dass der Hardware-Aufwand und der Raumbedarf erheblich geringer sind.

Die Erfindung wird nachfolgend anhand eines figürlich dargestellten Ausführungsbeispiels näher erläutert. Es zeigen:
- Fig. 1: eine schematische Darstellung der Verschaltung dreier Rechner zur Erzeugung eines Master-Clocks und
- Fig. 2: ein Amplitude/Zeit-Diagramm zur Veranschaulichung der Master-Clock-Generierung.

Dargestellt sind drei Rechner 1, 2 und 3, die ein Echtzeitsystem bilden, bei dem ein Master-Clock benötigt wird, welcher die Zykluszeit des Systems festlegt. Jeder Rechner 1, 2 und 3 ist mit zwei Digitaleingängen 4a, 4b; 5a, 5b und 6a, 6b zum Einlesen einer Rechnernummer über die Steckerkodierung versehen. Außerdem ist jeder Rechner 1, 2 und 3 mit einem Grundtakt-Ausgang 7, 8 und 9 verbunden, welcher an einen Eingang 7a, 7b, 7c; 8a, 8b, 8c und 9a, 9b, 9c eines jeden Rechners 1, 2 und 3 geführt ist. Des weiteren sind die Rechner 1, 2, 3 jeweils mit einem Timer 10, 11, 12 ausgestattet.

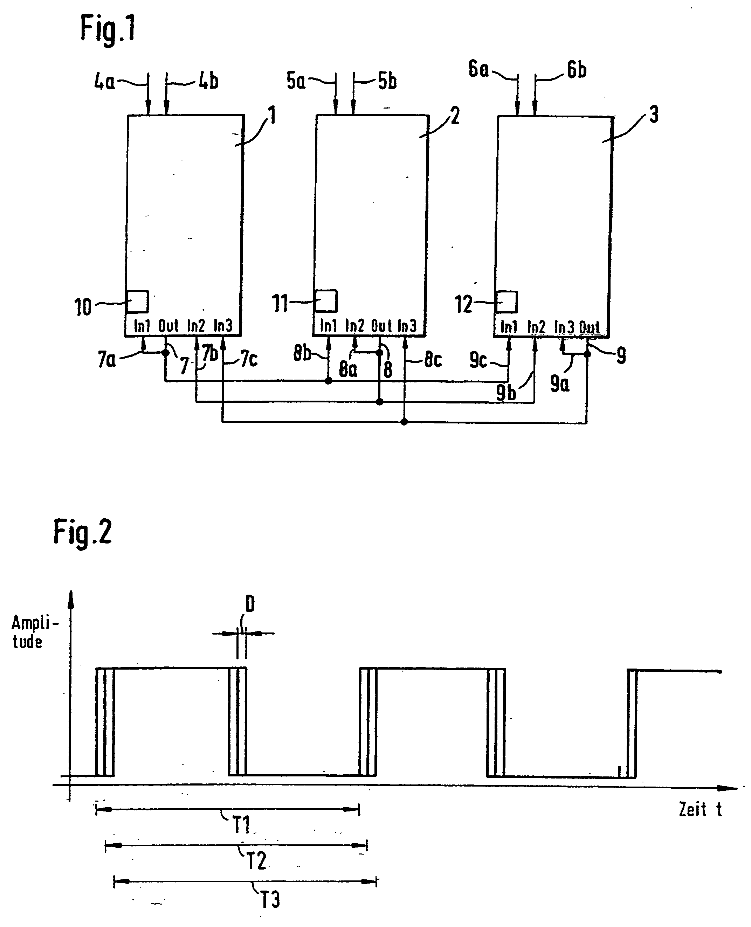

Unter Bezugnahme auf die Fig. 1 und 2 wird nachfolgend das Funktionsprinzip der Master-Clock-Generierung beschrieben.

Jeder Rechner 1, 2, 3 erzeugt einen Grundtakt T1, T2, T3 von 100 ms. Die Grundtakte T1, T2 und T3 der Rechner 1, 2 und 3 sind absolut synchron und weisen keinerlei Drift zueinander auf. Über die Eingänge 7a, 7b, 7c; 8a, 8b, 8c und 9a, 9b, 9c empfangen die Rechner 1, 2 und 3 den Grundtakt T1, T2, T3 von den beiden benachbarten Rechnern und auch von dem eigenen Rechner. Prinzipiell kann der Grundtakt-Eingang 7a, 8a, 9a, der mit dem Grundtakt-Ausgang 7, 8, 9 des eigenen Rechners 1, 2, 3 verbunden ist, auch weggelassen werden. Im Falle von drei Eingängen 7a, 7b, 7c; 8a, 8b, 8c und 9a, 9b, 9c ergibt sich jedoch der Vorteil, dass die Software zur Verarbeitung der Grundtakte T1, T2, T3 identisch sein kann, was zu einer wesentlichen Vereinfachung führt. Die Grundtakte T1, T2 und T3 weisen eine geringe Phasenverschiebung D im Bereich von 10 µs bis 100 µs zueinander auf, wobei die Größe der Phasenverschiebung D von der Leistungsfähigkeit der Rechner-Prozessoren und deren Interruptantwortzeit abhängt. Bei jedem Zyklus wird immer der zweite erkannte Grundtakt T2 als Master-Clock verwendet. Mit dem Startzeitpunkt eines neuen Zyklus initialisiert der Rechner 1, 2, 3 seinen Timer 10, 11, 12, mit dessen Hilfe überprüft wird, ob die steigende Flanke der drei Grundtakte T1, T2, T3 zum erwarteten Zeitpunkt erscheint. Aus der Reihenfolge, dem zeitlichen Abstand der Grundtakte T1, T2, T3 zueinander und der zugeordneten Grundtaktnummer bzw. Rechnemummer, die mittels der Digitaleingänge 4a, 4b; 5a, 5b und 6a, 6b eingelesen wird, ergibt sich eine einfache und sichere Feststellung darüber, ob ein Grundtakt T1, T2, T3 respektive Rechner 1, 2, 3 ausgefallen ist und gegebenenfalls um welchen Rechner 1, 2, 3 es sich dabei handelt. Auf diese Weise ist jeder Rechner 1, 2, 3 in der Lage, einen Grundtakt-Ausfall unabhängig von den beiden anderen Rechnern zu erkennen und eine entsprechende Fehlerreaktion auszulösen. Wenn der dritte Grundtakt T3 ausfällt, bleibt T2 weiterhin der Master-Clock. Bei Ausfall des ersten oder zweiten Grundtaktes T1 beziehungsweise T2 übernimmt der dritte Grundtakt T3 automatisch die Master-Clock-Funktion. In diesem Fall wird der Master-Clock in dem Zyklus, in dem T2 ausfällt, einmalig um die Phasendifferenz D vergrößert. Bezogen auf die Länge des Grundtaktes T1, T2 bzw. T3 ist dieser Versatz jedoch vernachlässigbar. In dem angegebenen Beispiel beträgt die maximale Vergrößerung des Master-Clocks 100 µs/100 ms, d.h. eine Vergrößerung um 1/1000 der normalen Grundtaktlänge.

Die Erfindung beschränkt sich nicht auf das vorstehend angegebene Ausführungsbeispiel. Vielmehr ist eine Anzahl von Varianten denkbar, welche auch bei grundsätzlich anderes gearteter Ausführung von den Merkmalen der Erfindung gebrauch machen.

## Patentansprüche

1. Mehrrechner-System mit Mitteln zur Erzeugung eines Master-Clocks zur Synchronisierung der Rechner (1, 2, 3),
**dadurch gekennzeichnet,**
**dass** jeder Rechner (1, 2, 3) Takterzeugungsmittel zur Erzeugung zueinander synchroner Grundtakte (T1, T2, T3) aufweist, wobei zwischen den Grundtakten (T1, T2, T3) eine geringe Phasenverschiebung (D), insbesondere < 1/1000 des Grundtaktes (T1, T2, T3), zulässig ist, und dass bei fehlerfreier und fehlerbehafteter Grundtakt-Generierung ein definierter und fehlerfreier Grundtakt den Master-Clock bildet.

2. Mehrrechner-System nach Anspruch 1,
**dadurch gekennzeichnet, dass** jeder Rechner (1, 2, 3) einen Grundtakt-Ausgang (7, 8, 9) aufweist, der über Synchronisationsleitungen mit Eingängen (7b, 7c; 8b, 8c; 9b, 9c oder 7a, 7b, 7c; 8a, 8b, 8c; 9a, 9b, 9c) der weiteren Rechner oder aller Rechner verbunden ist.

3. Mehrrechner-System nach einem der vorangehenden Ansprüche,
**dadurch gekennzeichnet, dass** jeder Rechner (1, 2, 3) Erkennungsmittel für die Erkennung einer Rechnernummer aufweist.

4. Mehrrechner-System nach Anspruch 3,
**dadurch gekennzeichnet, dass** die Erkennungsmittel als Digitaleingänge (4a, 4b; 5a, 5b; 6a, 6b) für das Einlesen der Rechnernummer über eine Steckerkodierung ausgebildet sind.

5. Mehrrechner-System nach einem der vorangehenden Ansprüche, **dadurch gekennzeichnet, dass** jeder Rechner (1, 2, 3) einen Timer (10, 11, 12) zur Erkennung des zeitlichen Abstandes der Grundtakte der weiteren Rechner zum eigenen Grundtakt aufweist.

6. Mehrrechner-System nach einem der vorangehenden Ansprüche, **gekennzeichnet durch** die Ausbildung als redundantes Dreirechner-System mit parallel laufenden Rechnern (1, 2, 3).

7. Mehrrechner-System nach Anspruch 6,
**dadurch gekennzeichnet, dass** bei fehlerfreiem Betrieb der mittlere Grundtakt (T2), dessen Flanke zeitlich zwischen dem ersten (T1) und dem dritten Grundtakt (T3) liegt, den Master-Clock bildet, während bei Ausfall des ersten (T1) oder des mittleren Grundtaktes (T2) der dritte Grundtakt (T3) den Master-Clock bildet.

## Claims

1. Multi-computer system with means for generating a master clock for synchronising the computers (1, 2, 3),
**characterised in that** each computer (1, 2, 3) has clock generating means for generating basic clocks (T1, T2, T3) synchronous with one another, a slight phase shift (D), in particular < 1/1000 of the basic clock (T1, T2, T3), being permissible between the basic clocks (T1, T2, T3), and a defined and fault-free basic clock forms the master clock in fault-free and defective basic clock generation.

2. Multi-computer system according to claim 1,
**characterised in that** each computer (1, 2, 3) has a basic clock output (7, 8, 9), which is connected via synchronisation lines to inputs (7b, 7c; 8b, 8c; 9b, 9c or 7a, 7b, 7c; 8a, 8b, 8c; 9a, 9b, 9c) of the further computers or all the computers.

3. Multi-computer system according to one of the preceding claims,
**characterised in that** each computer (1, 2, 3) has identification means for identifying a computer number.

4. Multi-computer system according to claim 3,
**characterised in that** the identification means are constructed as digital inputs (4a, 4b; 5a, 5b; 6a, 6b) for reading in the computer number via a plug coding.

5. Multi-computer system according to one of the preceding claims,
**characterised in that** each computer (1, 2, 3) has a timer (10, 11, 12) for identifying the chronological interval between the basic clocks of the further computers and its own basic clock.

6. Multi-computer system according to one of the preceding claims,
**characterised by** its construction as a redundant three-computer system with parallel-running computers (1, 2, 3).

7. Multi-computer system according to claim 6,
**characterised in that** in fault-free operation the intermediate basic clock (T2), whose edge is located chronologically between the first (T1) and the third basic clock (T3), forms the master clock, whereas if the first (T1) or the intermediate basic clock (T2) fails, the third basic clock (T3) forms the master clock.

## Revendications

1. Système multiordinateurs avec des moyens pour générer une horloge maîtresse pour la synchronisation des ordinateurs (1, 2, 3), **caractérisé en ce que**
chaque ordinateur (1, 2, 3) présente des moyens de génération de cycle pour générer des cycles de base (T1, T2, T3) synchrones les uns par rapport aux autres, un faible décalage de phase (D), en particulier < à 1/1000 du cycle de base (T1, T2, T3) étant autorisé entre les cycles de base (T1, T2, T3), et **en ce qu'**un cycle de base défini et sans erreur constitue l'horloge maîtresse dans le cas d'une génération de cycle de base sans erreur et avec erreur.

2. Système multiordinateurs selon la revendication 1,
**caractérisé en ce que** chaque ordinateur (1, 2, 3) présente une sortie du cycle de base (7, 8, 9), qui est reliée par des lignes de synchronisations aux entrées (7b, 7c ; 8b, 8c ; 9b, 9c ou 7a, 7b, 7c ; 8a, 8b, 8c ; 9a, 9b, 9c) des autres ordinateurs ou de tous les ordinateurs.

3. Système multiordinateurs selon l'une quelconque des revendications précédentes,
**caractérisé en ce que** chaque ordinateur (1, 2, 3) présente des moyens d'identification pour l'identification d'un numéro d'ordinateur.

4. Système multiordinateurs selon la revendication 3,
**caractérisé en ce que** les moyens d'identification sont réalisés comme des entrées numériques (4a, 4b ; 5a, 5b ; 6a, 6b) pour l'entrée du numéro d'ordinateur au moyen d'un codage de fiche.

5. Système multiordinateurs selon l'une quelconque des revendications précédentes,
**caractérisé en ce que** chaque ordinateur (1, 2, 3) présente une minuterie (10, 11, 12) pour l'identification de l'espacement de temps des cycles de base des autres ordinateurs par rapport au propre cycle de base.

6. Système multiordinateurs selon l'une quelconque des revendications précédentes,
**caractérisé par** la réalisation comme système redondant de trois ordinateurs avec des ordinateurs (1, 2, 3) fonctionnant en parallèle.

7. Système multiordinateurs selon la revendication 6,
**caractérisé en ce que**, en cas de fonctionnement sans erreur, le cycle de base (T2) moyen, dont le flanc se situe au niveau du temps entre le premier cycle de base (T1) et le troisième cycle de base (T3), constitue l'horloge maîtresse, alors que, dans le cas d'une défaillance du premier cycle de base (T1) ou du cycle de base moyen (T2), le troisième cycle de base (T3) constitue l'horloge maîtresse.
